(19) Europäisches Patentamt
European Patent Office
Office européen des brevets

(11) **EP 1 696 356 A1**

(12) **EUROPEAN PATENT APPLICATION**

(43) Date of publication:
**30.08.2006 Bulletin 2006/35**

(51) Int Cl.:
***G06F 17/50*** *(2006.01)*

(21) Application number: **05004043.5**

(22) Date of filing: **24.02.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **SIEMENS AKTIENGESELLSCHAFT
80333 München (DE)**

(72) Inventors:
• **Neuhierl, Barbara
81543 München (DE)**
• **Rank, Ernst, Prof. Dr.
82229 Seefeld (DE)**

(54) **Flow acoustic simulation with the Lattice-Boltzmann method**

(57)    The invention relates to a method for describing and numerical simulating aeroacoustic properties of a fluid-structure system.

The method is characterized by comprising the steps of mathematical describing and calculating of a flow of the fluid, thereby generating results for using in mathematical describing and calculating of vibrations of the structure, numerical simulating of the flow, the structural behaviour and the interaction of both and optimizing of the system with regard to its aeroacoustic properties.

The fluid dynamics part is solved by the Lattice-Boltzmann-Method. The structural mechanics part is solved by the Finite-Element-Method.

# FIG 1B

**Description**

The present invention concerns a method to describe and simulate aeroacoustic properties of a fluid-structure system.

In many fields of engineering the noise generated by a flowing fluid is of interest. Sometimes not only the fluid events itself cause sound phenomena, but also vibrations of structures excited by the flow like for example the walls of a pipe or components outside cars, trains or airplanes like mirrors, antennas, pantographs, etc. These vibrations can lead to further generation of noise. Sonic events caused by flowing procedures, like a flow over obstacles, around edges etc., are pressure fluctuations in the corresponding fluid, like air or water, and can excite certain structures laying within or surrounding the fluid to vibrate. The structure vibrations also affect the fluid, so that fluid and structure affect each other. The vibration frequencies of interest lie within the audible acoustic range.

To take into account both effects, the flow and the structural behaviour as well as the interaction of both have to be considered. Conventionally fluid-structure coupled problems of aeroacoustics merely have been solved experimentally. These methods are complex, time consuming and inaccurate.

It is an object of the present invention to describe and simulate a fluid-structure system concerning aerodynamic generated noise in a numerical way. This should be a basis for a simplified, effective and more accurate optimization procedure for aerodynamic fluid-structure system properties. The flow and the structural behaviour as well as the interaction of both should be taken into account.

This object is solved by a method according to the main claim, by a use according to claim 12, by a device according to claim 13 and by a storage means according to claim 14.

A method was developed to numerical simulate such coupled phenomena, that is these are approximately depicted by mathematical methods. The simulation enables an analyzing and optimizing already in the planning phase, before a real prototype exists.

According to the method for numerical describing aeroacoustic properties of a fluid-structure system, the steps of mathematical or numerical describing of a flow of the fluid, thereby enabling results for using in numerical describing of structural behaviour respectively vibrations of the structure, therewith enabling results for using in numerical describing of the flow of the fluid, and numerical simulating by calculating of the flow, the structural behaviour and the interaction of both, beginning with model parameter start values. At the beginning of the simulation a model with certain parameters and boundary conditions is chosen. Model parameters can be for example a diameter of a cylinder, a diameter of a tube or the flow resistance of a tube. The parameter value for a diameter of a cylinder is for example 20 cm.

According to an embodiment the simulating results of the flow are used for obtaining simulating results of the structure. The results converge by using the results of simulating the structural behaviour for the simulating of the flow and therewith providing a closed loop. The output from the system is fed back to adjust the input. This can be done automatically.

According to an embodiment an optimizing of the system with regard to its aeroacoustic properties can be performed by calculating of the flow, the structural behaviour and the interaction of both, using improved model parameter values leading to improved converging results. Comparisons of the results basing on the amended model parameter values are executed to find the best model parameter values. Better parameter values are chosen to improve the system. Taking into account more than the original parameters may also help to improve a system.

According to a preferred embodiment a Lattice-Boltzmann-Method is used for mathematical or numerical describing of the flow of the fluid, thereby especially generating pressure variations in time results, which can be considered as pressure stress variations in time which have effects on surfaces of the structure of the fluid-structure system. This is an example for a structural behaviour parameter. In order to calculate aeroacoustic effects, first of all the underlying flow problem has to be solved. This leads directly to computational fluid dynamics (CFD). Unlike the often called "classical CFD" which follows a macroscopic model by solving the discretized Navier-Stokes-Equations, the Lattice-Boltzmann method used here is based on a "mesoscopic" formulation, based on a strongly simplified kinetic theory that nevertheless approximates the Navier-Stokes equations. Below, the principle idea behind the theory is described briefly (for further explanations see [2,4]) . Starting from statistical physics and the Boltzmann equation

$$\frac{\partial f}{\partial t} + \bar{\xi}\, \frac{\partial f}{\partial \bar{x}} + \bar{F}\, \frac{\partial f}{\partial \bar{\xi}} = \Omega(f) \qquad\qquad (1)$$

where f represents the particle distribution function, $\xi$ the microscopic velocity and *F* an external force acting upon the fluid, the so-called Lattice-Boltzmann equation which is the basis of Lattice-Boltzmann method can be derived. $\Omega(f)$ symbolizes the so-called collision term. For gases with low Knudsen number

$$\varepsilon = \frac{l_r}{L_r} \qquad (2)$$

(with $l_r$ = mean free path length of the gas $L_r$ = characteristic scale length of the flow), $\Omega(f)$ has the following form (3) ($\tau$ denotes a "relaxation factor[2,4]) :

$$\Omega(f) = -\frac{1}{\tau}\left(f - f^{(0)}\right) \qquad (3)$$

By discretizing the Boltzmann equation (1) in the microscopic velocity space, substituting $f(t, x, e)$ for $f(t, x, \xi)$ with a set of N discrete microscopic velocities $e_i$ instead of the continuous velocity $\xi$, the discrete Boltzmann equation (4) can be derived:

$$\frac{\partial f}{\partial t} + \overline{e}_i \frac{\partial f}{\partial \overline{x}} = -\frac{1}{\tau}\left(f - f^{(0)}\right) \qquad (4)$$

After finally discretizing equation (4) spatially and in the time domain, we get the Lattice-Boltzmann equation (5).

$$f_i\left(t + \Delta t, \overline{x} + e_i \Delta t\right) = f_i\left(t, \overline{x}\right) - \frac{\Delta t}{\tau}\left(f_i\left(t, \overline{x}\right) - f_i^{(0)}\left(t, \overline{x}\right)\right) \qquad (5)$$

The repeated solution of the Lattice-Boltzmann equation, taking into account boundary conditions and fluid properties, characterizes the transient fluid behaviour and a moving be interpreted as a movement of a discrete set of particles that represent the fluid and can move with a certain velocity on a strictly regular grid. The geometry of bodies, e.g. lying inside and being passed by the fluid, are intersected with the grid cells, resulting in so-called "surfels"[9]. These represent the edge of the geometry during the simulation process, and different boundary conditions can be assigned. There are a couple of reasons for choosing the Lattice-Boltzmann Method (also called LBM) for calculating the fluid dynamic part of the problem. First of all, as explained above, the LBM is time-explicit which means that the solution of a flow problem always is transient. This is an important presupposition for aeroacoustic simulation. Second, aeroacoustic effects are intrinsically contained in the formulation of the Lattice-Boltzmann Method, because of the existence of the microscopic velocity (which has the dimension of the sound velocity). Furthermore, in reality high Reynolds numbers occur with aeroacoustic phenomena. The Kolmogorov law[10] describes the relation of the largest and smallest eddies inside a flow.

$$\frac{L}{l_k} = \mathrm{Re}^{3/4} \qquad (6)$$

Even with the fast computers available today it is not possible to solve this problem directly, and therefore turbulence modelling has to be able to calculate high Reynolds problems. A sophisticated k-$\varepsilon$-turbulence model should used where k and $\varepsilon$ represent a numerical approach for the dissipation rate and the turbulent kinetic energy of a flow (for further information see [4]). Finally, the LBM is very suitable for parallel computing, and in that way enable fine dissolution of the spatial stream area with tenable effort.

According to a further advantageous embodiment a Finite Element Method is used for mathematical or numerical describing of vibrations of the structure, thereby especially using pressure variations in time results, which can also be considered as pressure stress variations in time results or as structure surface pressure stress variations in time. The surface loads caused by the flow have the form of transient surface pressures varying in the time domain. The finite element method enables the computation of the structural transient answer of the structure to the pressure data, which might lead to vibrations of the body. Aeroacoustic effects develop out of fluctuations in pressure which are caused by fluid processes and are noticeable e.g. by a microphone or by the human ear. The crucial point in aeroacoustic simulation is to reproduce the pressure variation in time adequate enough for the resolution of the particular frequencies of the sound. These frequencies thus determine the level of discretisation required. The fluid has to be discretized both in the time and in the frequency domain in order to match the wavelength in the fluid and the frequency as well as the spatial scales of the underlying fluid problem. The flow described above leads to pressures which act onto the surface of a structure lying within the flow and can cause deformation and vibration. The Finite Element Method (FEM) is an appropriate technology to calculate these effects. Sophisticated methods for the computation of transient structural dynamics, like e.g. the Newmark time integration scheme[1] can be additionally performed and transient load problems should be solved.

According to a further advantageous embodiment a certain number n of Lattice-Boltzmann flow steps is calculated. The necessary amount of flow steps depends on the problem. It should be low enough to avoid aliasing and should be as high as possible to decrease the expenditure of calculations. It is determined iteratively.

According to a further advantageous embodiment the number n is between 10 and 100.

According to a further advantageous embodiment the results after n flow simulation steps being the pressure stress variations in time which have an effect on structure surface(s). This means the result after n flow simulation steps is deposited on the structure surface as pressure stresses.

According to a further advantageous embodiment after executing the number n flow simulation steps simulating a structure answer in one time step resulting in structure surface accelerations and bounces being flow parameters is performed. This means on structure step is simulated. The simulation of the structure answer in one time step leads to the structure surface accelerations and bounces. As the CFD calculation is time explicit, a number of LBM timesteps has to be determined that is dependent of the particular problem and represent one timestep of the structural calculation, avoiding "aliasing". To perform one structural loadstep, it is therefore necessary to calculate n fluid loadsteps. The finite element method enables the computation of the structural transient answer of the structure to the pressure data, which might lead to vibrations of the body.

According to a further advantageous embodiment the structure surface accelerations and bounces are used as dynamic boundary conditions for n further flow simulation steps.

According to a further advantageous embodiment the loop is repeated until stable conditions are reached. This is when the results are converging. The finite element method enables the computation of the structural transient answer of the structure to the pressure data, which might lead to vibrations of the body. The influence of this vibrations on the surrounding fluid are retransferred back into the CFD environment, and this loop or circle will have to be run through several times to achieve a stable, "steady-state" interaction.

By using the above stated methods for example tube lines, ventilators, air condition channels or components outside moving devices (like cars or airplanes) can be improved with regard to their aeroacoustic properties. Components outside cars, trains or airplanes like mirrors, antennas, pantographs also can be improved.

A device comprising a processor unit, storage means, a bus system, input and output means can perform the above stated methods.

On storage means, like compact disks, information for performing one of the above stated methods, for example on a Personal Computer, can be stored.

The invention is described by embodiments in connection with the Figs. The Figs. show:

Fig. 1a    a diagram showing the function of a coupling routine coupling fluid and structure software;

Fig. 1b    another diagram showing the function of a coupling routine coupling fluid and structure software;

Fig. 2    an embodiment for a theoretical model;

Fig. 3    a diagram of the dependency of Strouhal and Reynolds numbers with reference to the theoretical model;

Fig. 4    a diagram of the dependency of pressure fluctuation and frequency with reference to the theoretical model;

Fig. 5    a diagram of the calculated frequency versus the theoretical Strouhal frequency with reference to the theoretical model.

According to an embodiment the commercially available Lattice-Boltzmann-Method (LBM) code "(Exa)Power-Flow" for calculating the fluid dynamic part of the problem is used.

For performing the Finite Element Method (FEM) the commercially available FEM-Software "ANSYS" for calculating the structural mechanics respectively structure dynamic part of the problem is used. This ANSYS software provides sophisticated methods for the computation of transient structural dynamics, like e.g. the Newmark time integration scheme[1] and possibilities for transient load application.

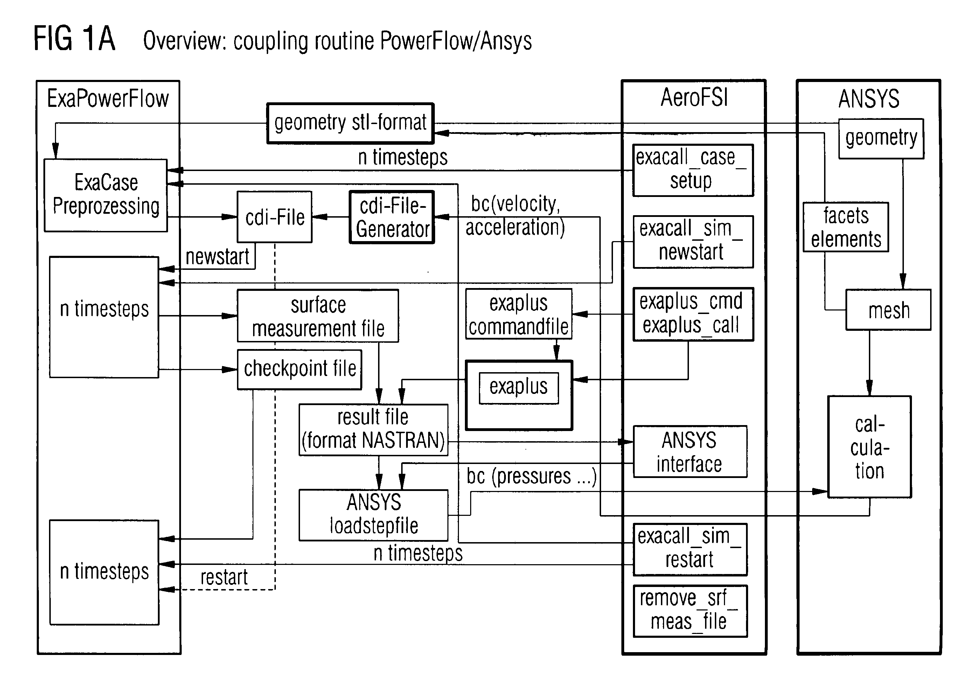

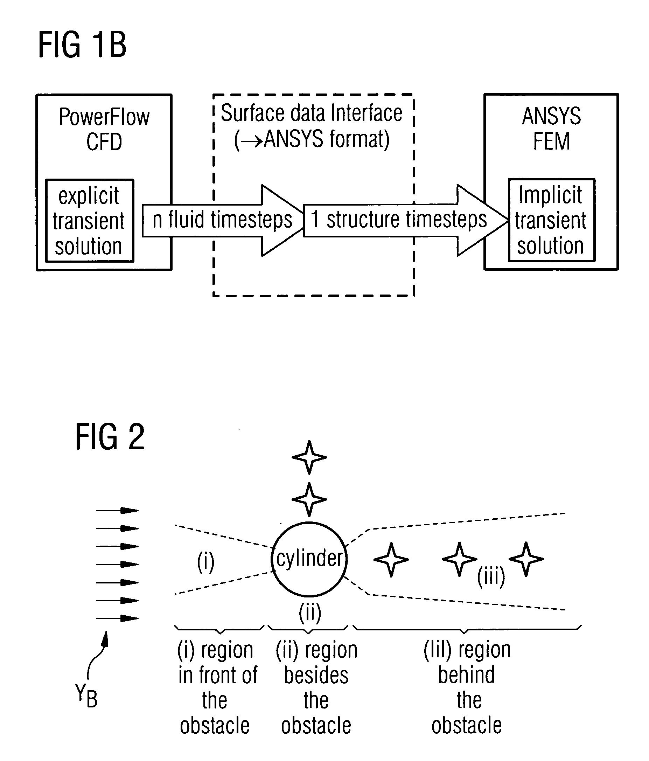

The combination results in a fluid-structural coupling leading to the possibility for calculation of aeroacoustic effects and for aeroacoustic statements. To realize fluid-structure-coupling, a coupling software program "AeroFSI" was written in the object-oriented scripting language "Python". The Python coupling software executes both ANSYS and PowerFlow by starting child processes, and controls timestep sizes as well as results output. Therewith in each coupled step a number (n) of Lattice-Boltzmann flow steps are calculated. The surface loads caused by the flow have the form of transient surface pressures varying in the time domain. As the CFD calculation is time explicit, a number of (Exa) PowerFlow timesteps has to be determined that is dependent on the particular problem and represents one timestep of the structural calculation (see Figs. 1a and 1b), avoiding "aliasing". Figs. 1a and 1b show diagrams indicating the function of a coupling routine coupling fluid and structure software. To perform one structural loadstep, it is therefore necessary to calculate several (n) fluid loadsteps. To apply the pressures acting onto the structure model, an interface was generated that provides load step files in a format readable by ANSYS. Results are exchanged by respectively therefore written interfaces. Therewith on the basis on the already existing interfaces for the format "NASTRAN" in (Exa)PowerFlow so called ANSYS load step files are generated. These files comprise the corresponding data in format readable for ANSYS. Fig. 1a and 1b show diagrams indicating the function of the coupling routine coupling fluid and structure software.

Further necessary activities that have to be realized by the coupling software are the treatment and correct scaling of the PowerFlow time information. The finite element code enables the computation of the structural transient answer of the structure to the pressure data, which might lead to vibrations of the body. The influence of this vibrations on the surrounding fluid are then retransferred back into the CFD environment, and this circle will have to be run through several times to achieve a stable, "steady-state" interaction.

Fig. 2 shows an embodiment for a theoretical model of a flow around a circular cylinder as an example for a fluid-structure system to improve.

In order to be able to verify computational results, the flow around a circular cylinder was chosen as a theoretical model. Both fluid dynamic simulations and structural computations were performed.

Aeolian Tones

The flow around a circular cylinder has already been the subject of several investigations. The occurring effects are well-known and have been evaluated in many experiments. Fig. 2 shows an embodiment for a theoretical model as a typical setup of such an experiment or a simulation model. The asterisks symbolize points where microphones (real ones in experiments and virtual ones in simulations) are placed.

The cylinder as an obstacle in the flow causes a certain distortion which is dependent of the dimensionless Reynolds number of the problem, given by equation (7) ($v_0$ = velocity of the undisturbed flow, d = diameter of the cylinder, v = viscosity of the fluid). The occurring effects are well-known and have been evaluated in many experiments.

$$re = \frac{v_0^* d}{v} \qquad (7)$$

In front of the cylinder (region (i) of figure 2) the flow is decelerated, while besides (region (ii)) an acceleration of the flow can be observed. Behind the cylinder (region (iii) of figure 2)) a wake develops which is typical for the Reynolds number. It is assumed that the Reynolds number of the flow is steadily increased by raising the stream velocity like in a wind channel. The flow will develop from a laminar state where the streamlines always lie against the walls of the obstacle at very low Reynolds number (re=1-3, "potential flow") over a still laminar eddy street in the wake (re=30 to 1500) to more and more turbulent states where at first turbulent eddies are produced in the far wake (re=1000 to $10^6$), then moves against the stream direction towards the obstacle. Finally stall of turbulent eddies occurs right at the surface of the cylinder (re > $10^6$).

The flow around a circular cylinder is well known and has been the object of innumerable experiments in the past. Therefore it was chosen as a theoretical verification model for the simulation of aerodynamic sound effects.

In the wake of the cylinder the famous "v.Kármàn vortex streets" are produced which cause narrow-banded sound, the so-called "Aeolian Tones" (from Aeolus = god of wind at the old Greeks). We emphasize that this particular sound is not caused by vibrations of the body but by the flow around the obstacle itself. The frequency of the generated sound is characterized by the Strouhal number which is dependent of the Reynolds number and is shown in equation (8) (f=frequency, d=diameter of the cylinder, v=stream velocity of undisturbed flow).

$$str = f \frac{d}{v} \qquad\qquad (8).$$

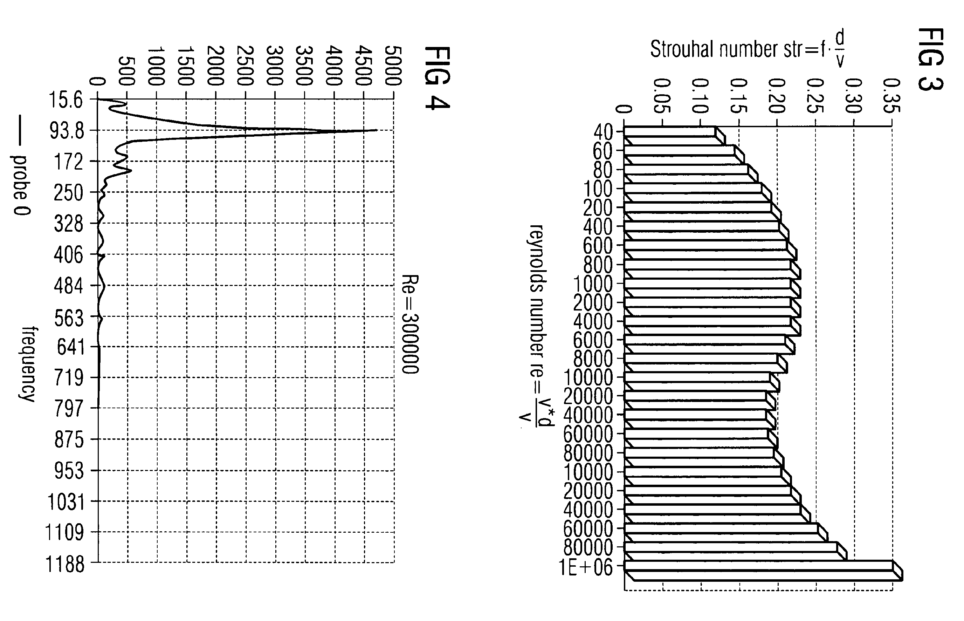

Fig. 3 shows a diagram of the dependency of Strouhal and Reynolds numbers with reference to the theoretical model.

Simulation with the Lattice-Boltzmann-Program

An exemplary showcase model simulation with the Reynolds number Re=300000 was computed. The simulation setup was built up corresponding to Fig. 2. The model contained $10^4$ grid cells and respectively voxels, and 2000 "surfels". The pressure fluctuations were measured in the time domain at specified locations besides the cylinder, analogous to the microscope points shown in Fig. 2. Then a Fast Fourier Transformation (FFT) was performed. Fig. 4 shows a diagram of the dependency of pressure fluctuation and frequency with reference to the theoretical model. As it can be seen in Fig. 4, the resulting frequency peak occurs at about 93 Hz and so fits (more or less) the theoretically expected Strouhal frequency.

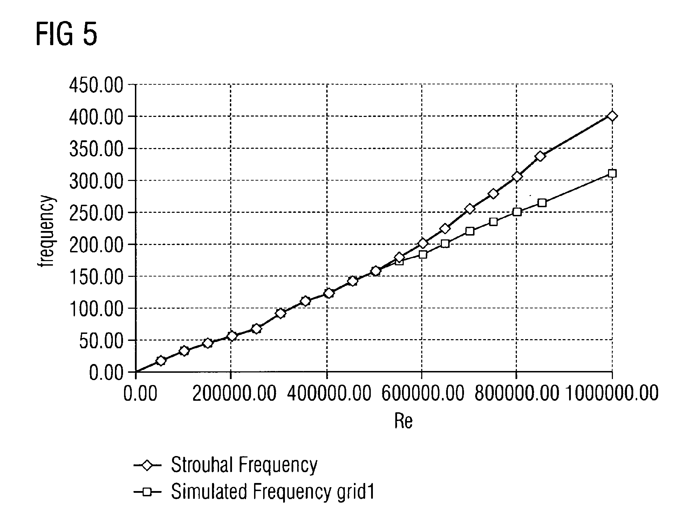

Further on, several simulations of the same problem with varying but nevertheless high Reynolds numbers and on two different grids with unequal refinement, starting from 50000 and going up to 1e$^6$, were performed. Grid 1 had a finest resolution of 0.005m and a grid 2 of 0.01m. Four different grid size levels were used in order to reduce the calculation effort and simulation time. The results are resumed below: Fig. 5 shows a diagram of the calculated frequency versus the theoretical Strouhal frequency with reference to the theoretical model. Fig. 5 shows the calculated frequencies using grid 1 and grid 2 versus the theoretically determined Strouhal frequency according to Fig. 3 and equation (8), dependent on the Reynolds number according to equation (7). The most remarkable thing about the described results is that the accuracy of the calculated frequencies differs more and more from the theoretical Strouhal frequency with increasing Reynolds number and decreasing grid refinement. This effect can be explained by the formulation of the microscopic velocity and the numeric viscosity which lead to inexactness with too coarse grids.

Simulation with the FEM-Program (ANSYS) was meshed with the element "solid 187" which represents a 10-node-tetraedal Element. The model contains about 800 solid elements and about 1700 surface facets, and was fully supported at its end. The oscillating transient pressures were applied to the surface facets. Further the structural response has to be calculated adequately.

The approach described in connection with the embodiment of the theoretical model according to Fig. 2 is the starting basis for the realization of a bi-directional coupling procedure that will enable the calculation of aeroacoustic effects in connection with coupled effects that can occur if structure and fluid influence each other mutually.

The above described method enables the numeric simulation of certain phenomena at which flow acoustic processes and thereby caused structure vibrations influence each other mutually.

To sum up the invention relates to the simulation of aerodynamic generated noise, including coupling effects between fluid and structure. Aeroacoustic phenomena are caused by dedicated flow procedures that have to be treated preliminary. Furthermore, the flow can lead to vibrations by exciting structures which surround the fluid or lie within it. The vibrations themselves can result in the generation of noise. To represent these vibrations, the structural mechanic behaviour of the affected components must be taken into account. For the time-dependent calculation of pressure and density within a fluid required for aeroacoustic simulation, the Lattice-Boltzmann method and the commercial available Lattice-Boltzmann software code "(Exa)PowerFlow" were used. On the FEM side, "Ansys" was used. On the FEM side, "Ansys" was used to calculate the response of structures to aerodynamic loads. To realize the time-dependent loading, an interface was created which allows the export of transient fluid data, like pressures on structures, into a format readable by "Ansys". The coupling between fluid and structure was realized with the help of a coupling software program, which was written for this very purpose and is to control the execution of both Ansys and PowerFlow as well as the time integration steps and the data exchange between the two commercial programs. The flow around a circular cylinder was chosen as a theoretical model for the verification of simulation results.

References

[1]     Klaus-Jargen Bathe, "Finite Element Methoden", Springer 1999

[2]     Huodong Chen, Christ Teixeira, Kim Molvig: "Digital Physics approach to Computational Fluid Dynamics: Some basic theoretical Features", International Journal of Modern Physics C, World Scientific Publishing Company

[3]    Mehtab M. Pervaiz and Christopher M. Teixeira, "Two equation Turbulence Modeling with the Lattice-Boltzmann Method", 2nd International Symposium on Computational Technologies for Fluid/Thermal/Chemical Systems with Industrial Applications, ASME PVP Division Conference, August 1/5, 1999, Boston MA

[4]    Manfred Krafczyk, "Gitter-Boltzmann-Methoden: Von der Theorie zur Anwendung", Habilitationsschrift, Technische Universität München,

[5]    M.M. Zdravkovich, "Flow around circular cylinders", Volume I, "Fundamentals", Oxford University Press, 1997

[6]    M.M. Zdravkovich, "Flow around circular cylinders", Volume II, "Applications", Oxford University Press, 2003

[7]    Sauro Succi, "The Lattice Boltzmann Equation. For fluid dynamics and Beyond", Clarendon Press, 2001

[8]    B. Etkin, G. K. Korbacher, T. Keefe, "Acoustic Radiation from a Stationary Cylinder in a Fluid Stream: Aeolin Tones", The Journal of the acoustic Society of America, volume 29, no. 1, January 1995

[9]    PowerFlow User's Guide, Release 3.4, Exa Corporation

[10]    Herbert Oertel, Eckart Laurien, "Numerische Stromungsmechanik", Vierweg Verlag, 2003

**Claims**

1.    Method for numerical describing and simulating of aeroacoustic properties of a fluid-structure system, comprising the steps of

- numerical description of a flow of the fluid and of a structural behaviour,
- numerical simulation by calculating of the flow, the structural behaviour and the interaction of both beginning with model parameter start values and boundary conditions.

2.    Method according to claim 1,
**characterized by**
calculating of the flow to generate structural behaviour parameters which are used for calculating of the structural behaviour to generate flow parameters which are feed back for the calculating of the flow, thereby performing loops until the results converge.

3.    Method according to claim 1 or 2, further
**characterized by**
optimizing of the system with regard to its aeroacoustic properties by calculating of the flow, the structural behaviour and the interaction of both, using improved model parameter values leading to improved converging results.

4.    Method according to one or more of claims 1 to 3,
**characterized by**
using a Lattice-Boltzmann-Method for numerical describing of the flow of the fluid, thereby especially enabling pressure stress variations in time results as structural behaviour parameters.

5.    Method according to one or more of claims 1 to 4,
**characterized by**
 using a Finite Element Method for numerical describing of structural behaviour, thereby especially enabling the use of pressure stress variations in time results as structural behaviour parameters.

6.    Method according to one or more of the claims 1 to 5,
**characterized by**
a number n of Lattice-Boltzmann flow simulation steps is calculated.

7.    Method according to claim 6,
**characterized by**
the number n is between 10 and 100.

**8.** Method according to claim 6 or 7,
**characterized by**
the results after n flow simulation steps being the pressure stress variations in time as structural behaviour parameters which have an effect on structure surfaces.

**9.** Method according to claim 8,
**characterized by**
afterwards simulating a structure answer in one time step resulting in structure surface accelerations and bounces being flow parameters.

**10.** Method according to claim 9,
**characterized by**
using the structure surface accelerations and bounces as dynamic boundary conditions for n further flow simulation steps.

**11.** Method according to claims 6 to 10,
**characterized by**
repeating the loop until reaching converging results.

**12.** Use of a method according to one or more of the claims 3 to 11,
**characterized by**
improving tube lines, ventilators, air condition channels or components outside moving devices with regard to their aeroacoustic properties.

**13.** Device for performing a method according to one or more of the claims 1 to 11,
**characterized by**
a processor unit, storage means, a bus system, input and output means.

**14.** Storage means,
**characterized by**
storing information for performing a method according to one or more of the claims 1 to 11 on a device according to claim 13.

FIG 1A  Overview: coupling routine PowerFlow/Ansys

## FIG 1B

| PowerFlow CFD | Surface data Interface (→ANSYS format) | ANSYS FEM |
|---|---|---|
| explicit transient solution | n fluid timesteps → 1 structure timesteps → | Implicit transient solution |

## FIG 2

(i)  cylinder  (iii)

(ii)

(i) region in front of the obstacle

(ii) region besides the obstacle

(Iil) region behind the obstacle

$Y_B$

## FIG 3

## FIG 4

Re = 300000

# FIG 5

Legend:
—◇— Strouhal Frequency
—□— Simulated Frequency grid1

**European Patent Office**

## EUROPEAN SEARCH REPORT

Application Number

EP 05 00 4043

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | TEIXEIRA P R F ET AL: "Numerical simulation of fluid-structure interaction using the finite element method" COMPUTERS AND FLUIDS, PERGAMON PRESS, NEW YORK, NY, GB, vol. 34, no. 2, 20 July 2004 (2004-07-20), pages 249-273, XP004580504 ISSN: 0045-7930 | 1,5,13 | G06F17/50 |
| Y | * the whole document * | 2-4, 6-12,14 | |
| X | RYAN K ET AL: "Flow-induced vibrations of a tethered circular cylinder" JOURNAL OF FLUIDS AND STRUCTURES, ACADEMIC PRESS, vol. 19, no. 8, November 2004 (2004-11), pages 1085-1102, XP004647437 ISSN: 0889-9746 | 1,13 | |
| Y | * the whole document * | 2-12,14 | |
| Y | ANDREAS WILDE: "Application of the Lattice-Boltzmann method in flow acoustics" SWING WORKSHOP AACHEN 26. FEB. 2004, 26 February 2004 (2004-02-26), XP002337157 * the whole document * | 4 | TECHNICAL FIELDS SEARCHED (Int.Cl.7) G06F |
| Y | KAMAKOTI R ET AL: "Fluid-structure interaction for aeroelastic applications" PROGRESS IN AEROSPACE SCIENCES, OXFORD, GB, vol. 40, no. 8, November 2004 (2004-11), pages 535-558, XP004809381 ISSN: 0376-0421 * the whole document * | 2-12,14 | |

-/--

The present search report has been drawn up for all claims

| Place of search | Date of completion of the search | Examiner |
|---|---|---|
| Munich | 21 July 2005 | Lerbinger, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 05 00 4043

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | LOCKARD D P ET AL: "Evaluation of PowerFLOW for aerodynamic applications" JOURNAL OF STATISTICAL PHYSICS KLUWER ACADEMIC/PLENUM PUBLISHERS USA, vol. 107, no. 1-2, April 2002 (2002-04), pages 423-478, XP002337158 ISSN: 0022-4715 * the whole document * | 2-12,14 | |

TECHNICAL FIELDS SEARCHED (Int.Cl.7)

The present search report has been drawn up for all claims

| Place of search | Date of completion of the search | Examiner |
|---|---|---|
| Munich | 21 July 2005 | Lerbinger, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)